# EUROPÄISCHE PATENTSCHRIFT

(11) **EP 3 850 595 B1**
(45) Veröffentlichungstag und Bekanntmachung des Hinweises auf die Patenterteilung: **21.06.2023**
(21) Anmeldenummer: 19766021.0
(22) Anmeldetag: 10.09.2019
(51) Int. Cl.: G06V 10/94, G06V 10/10, F21V 8/00, G07D 7/121

(54) **VORRICHTUNG ZUR OPTISCHEN ERFASSUNG ZUMINDEST EINES TEILS EINES DOKUMENTS UND VERWENDUNG EINER SOLCHEN**
DEVICE FOR OPTICAL CAPTURE OF AT LEAST A PART OF A DOCUMENT, AND USE OF SUCH A DEVICE
DISPOSITIF DE DÉTECTION OPTIQUE D'AU MOINS UNE PARTIE D'UN DOCUMENT ET UTILISATION D'UN TEL DISPOSITIF

(30) Priorität: 13.09.2018 DE 102018122389
(43) Veröffentlichungstag der Anmeldung: 21.07.2021
(73) Patentinhaber: Bundesdruckerei GmbH, 10969 Berlin (DE)
(72) Erfinder: THATER, Marcel, 30952 Ronnenberg (DE); RABELER, Uwe, 30453 Hannover (DE)
(74) Vertreter: Hentrich Patent- & Rechtsanwaltspartnerschaft mbB
(86) Internationale Anmeldenummer: PCT/EP2019/074033
(87) Internationale Veröffentlichungsnummer: WO 2020/053171

(56) Entgegenhaltungen:
- DE-B3-102007 031 230
- US-A- 5 574 790
- US-B2- 8 836 926

## Beschreibung

Die Erfindung betrifft eine Vorrichtung zur optischen Erfassung zumindest eines Teils eines Dokuments, insbesondere eines Ausweis-, Wert- oder Sicherheitsdokuments, gemäß dem Oberbegriff des Anspruchs 1. Die Vorrichtung umfasst eine zumindest teiltransparente Auflage zum Auflegen des Dokuments und eine Licht emittierende Beleuchtungseinrichtung. Außerdem ist eine zumindest mittelbar an einer Gehäusewand eines Gehäuses angeordnete Lichtleiteinrichtung vorhanden, die einen oder mehrere Lichtleiter umfasst, wobei das von der Beleuchtungseinrichtung emittierte Licht in den einen oder die mehreren Lichtleiter einkoppelbar oder eingekoppelt ist.

Offenbart wird auch ein Verfahren zur optischen Erfassung zumindest eines Teils eines Dokuments, insbesondere eines Ausweis-, Wert- oder Sicherheitsdokuments. Es umfasst insbesondere die Schritte des Auflegens des Dokuments auf eine zumindest teiltransparente Auflage, der Emission von Licht mittels einer Beleuchtungseinrichtung, sowie des Einkoppelns des emittierten Lichts in eine einen oder mehrere Lichtleiter umfassende Lichtleiteinrichtung, welche an einer Gehäusewand eines Gehäuses angeordnet ist.

Eine Vorrichtung und ein Verfahren zur optischen Erfassung zumindest eines Teils eines Dokuments, insbesondere eines Ausweis-, Wert- oder Sicherheitsdokuments ist in der DE 10 2014 205 363 A1 der Anmelderin beschrieben. Hierbei werden Dokumente, insbesondere Ausweis-, Wert- oder Sicherheitsdokumente, beispielsweise Reisepässe, optisch erfasst, wobei eine sehr homogene Beleuchtung des zu erfassenden Dokuments erfolgt. Zudem weist die darin beschriebene Vorrichtung einen nur geringen Bauraumbedarf auf, wobei zugleich nahezu reflexionsfreie Aufnahmen von Passdokumenten gemacht werden können.

Ausweis-, Wert- oder Sicherheitsdokumente verfügen zunehmend über optische Sicherheitsmerkmale, die bei deren Ablichtung zu Glanzlichtern und störenden Reflexionen führen, so dass sich die Aufnahme von dem unterscheidet, was ein Betrachter mit den eigenen Augen sieht, und es zu Schwierigkeiten bei der Fälschungserkennung kommt.

In der US 8 836 926 B2 ist eine Vorrichtung zur Überprüfung einer Banknote oder eines Sicherheitsdokuments beschrieben, wobei das Sicherheitsdokument von hinten durchleuchtet wird, um es von vorne optisch zu erfassen.

In der DE 10 2007 031 230 B3 sind ein Dokumentenerfassungssystem und ein Dokumentenerfassungsverfahren gezeigt, bei dem mehrere Sensoren zur Erfassung des von einem Dokument reflektierten Lichts vorhanden sind.

Eine Vorrichtung gemäß dem Oberbegriff des Anspruchs 1 ist aus der US 5 574 790 A bekannt. Diese Vorrichtung ermöglicht das optische Erfassen eines Dokuments und die Überprüfung, ob das Dokument gefälscht wurde.

Es ist daher die Aufgabe der vorliegenden Erfindung, eine Vorrichtung zur optischen Erfassung derart weiterzubilden, dass die vorstehend genannten Nachteile reduziert werden. Außerdem ist es Aufgabe der vorliegenden Erfindung, eine Verwendung einer solchen Vorrichtung anzugeben.

Der die Vorrichtung betreffende Teil der Aufgabe wird durch eine Vorrichtung gemäß Anspruch 1 gelöst, wonach der eine oder die mehreren Lichtleiter der Lichtleiteinrichtung derart im Gehäuse angeordnet sind, dass die Lichtleiteinrichtung eine bezüglich einer Längsachse radial ausgerichtete und über einen Umfang eines zylindrischen Innenvolumens gleichmäßig verteilte Anordnung aufweist.

Durch diese symmetrische Anordnung der Lichtleiteinrichtung innerhalb des Gehäuses lässt sich ein besonders homogenes und diffuses Licht zur Beleuchtung des Dokuments erzeugen. Die Erfindung beruht auf der Erkenntnis und schließt diese mit ein, dass eine möglichst homogene Beleuchtung des zu erfassenden Dokuments eine Reduktion der oben genannten störenden Effekte bewirkt.

Eine auf einfache Weise zu realisierende symmetrische Anordnung lässt sich dadurch erreichen, dass der Lichtleiter der Lichtleiteinrichtung hohlzylindrisch geformt ist. Dabei kann der Lichtleiter ein dünnwandig ausgebildetes Element sein und insbesondere in Form einer Folie vorliegen.

Zur Erzeugung einer möglichst diffusen Beleuchtung des Dokuments und damit für eine besonders homogene Ausleuchtung hat es sich als vorteilhaft erwiesen, wenn der eine oder die mehreren Lichtleiter Störstellen umfassen, die Streuzentren für Licht bilden. An diesen Störstellen wird also das Licht gestreut, bis es über eine Auskoppeloberfläche in das zylindrische Innenvolumen aus der Lichtleiteinrichtung ausgekoppelt wird.

Vorzugsweise ist die Beleuchtungseinrichtung ausgestaltet, Licht mit verschiedenen Spektren oder in verschiedenen Spektralbereichen zu erzeugen und in die Lichtleiteinrichtung einzukoppeln. Damit lässt sich also das Dokument mit Licht dieser verschiedenen Spektren oder Spektralbereiche beleuchten. Es hat sich jedoch auch als vorteilhaft erwiesen, wenn der eine oder die mehreren Lichtleiter aus einem Material gebildet sind, welches opak ist für Licht mit einer Wellenlänge außerhalb eines Bereichs von 360 Nanometern (nm) bis 950 Nanometern. Eine Beleuchtung innerhalb dieses Bereiches hat sich als vorteilhaft bei Passlesern erwiesen, wobei die Lichtleiteinrichtung dabei als Filter für Wellenlängen außerhalb dieses Spektralbereichs agiert.

Die Beleuchtungsintensität lässt sich zudem dadurch erhöhen, dass die Gehäusewand einen bezüglich der Längsachse des Gehäuses und/oder des Innenvolumens radial nach innen gerichteten Reflektor bildet, der ausgestaltet ist, auf ihn auftreffendes Licht in den einen oder die mehreren Lichtleiter zu reflektieren.

Zur Bildung einer Vorrichtung mit einem besonders kompakten Aufbau hat es sich als sinnvoll erwiesen, wenn die Beleuchtungseinrichtung eine Mehrzahl von Leuchteinheiten umfasst, und wenn die Leuchteinheiten ausgestaltet sind, Licht in einer einen axialen Anteil aufweisenden Richtung, insbesondere koaxial zur Längsachse, in den einen oder die mehreren Lichtleiter einzukoppeln.

Zur homogenen Beleuchtung des Dokumententeils hat es sich als vorteilhaft herausgestellt, wenn die Leuchteinheiten auf einem - zumindest gedachten - Leuchtenkreis angeordnet sind, der konzentrisch zur Längsachse angeordnet ist.

Die Homogenität der Beleuchtung wird zudem dadurch erhöht, dass die Leuchteinheiten äquidistant zueinander und/oder gleichverteilt auf dem Leuchtenkreis angeordnet sind. Die Leuchteinheiten umfassen hierbei ein kostengünstiges Leuchtmittel, insbesondere aber zumindest eine Beleuchtungsquelle, zum Beispiel eine LED oder eine ähnliche Beleuchtungsquelle, um Licht zu erzeugen.

Bei der optischen Erfassung des Dokuments ist es sinnvoll, zumindest größtenteils nur diejenigen Lichtstrahlen zu erfassen, die vom Dokument ausgehen. Es hat sich daher als vorteilhaft erwiesen, wenn eine Aperturblende vorhanden ist zur Reduktion eines Störlichtanteils, insbesondere von Störlichtern, die aus der Lichtleiteinrichtung entkoppelt werden und unmittelbar an das menschliche Auge oder die Bilderfassungseinrichtung gelangen.

Zudem hat es sich als vorteilhaft gezeigt, wenn eine Bilderfassungseinrichtung vorhanden ist, die derart ausgelegt ist, um von dem Dokument ausgehende Lichtstrahlen zumindest mittelbar zu erfassen. Hierbei können die vom Dokument ausgehenden Lichtstrahlen beispielsweise über eine Spiegelanordnung geleitet werden, bevor sie auf die Bilderfassungseinrichtung auftreffen. Eine besonders kompakte Vorrichtung ist jedoch durch eine spiegellose Gestaltung erreichbar.

Der die Verwendung betreffende Teil der Aufgabe wird durch eine Verwendung gemäß Anspruch 11 gelöst. Sie zeichnet sich insbesondere dadurch aus, dass die Lichtleiteinrichtung eine einteilig oder mehrteilig gebildete Auskoppeloberfläche umfasst, welche radial bezüglich einer Längsachse orientiert und über einen Umfang eines Innenvolumens gleichmäßig verteilt angeordnet ist, und dadurch, dass das Licht über die Auskoppeloberfläche in das Innenvolumen ausgekoppelt wird, bevor es auf dem optisch zu erfassenden Teil des auf der Auflage aufgelegten Dokuments auftrifft.

Auch bei dieser Verwendung lässt sich eine besonders homogene Beleuchtung des zu erfassenden Dokuments erzielen, die sich aufgrund der symmetrischen Ausgestaltung der Lichtleiteinrichtung ergibt.

Um zudem die Anforderungen an einen geringen Bauraumbedarf erfüllen zu können, hat es sich als sinnvoll herausgestellt, wenn das in die Lichtleiteinrichtung über eine stirnseitig an dieser angeordnete sowie einteilig oder mehrteilig gebildete Einkoppeloberfläche eingekoppelte Licht an mindestens einer Störstelle der Lichtleiteinrichtung gestreut wird, bevor es die Lichtleiteinrichtung über die Auskoppeloberfläche ins Innenvolumen verlässt.

Beim Einsatz in Passlesern hat es sich als vorteilhaft erwiesen, wenn die Lichtleiteinrichtung Licht leitet, dessen Wellenlänge innerhalb eines (Spektral-) Bereichs von 360 Nanometern bis 950 Nanometern liegt, und dass die Lichtleiteinrichtung opak für Licht mit Wellenlängen außerhalb dieses (Spektral-) Bereichs ist.

Um den Störlichtanteil bei der optischen Erfassung zu reduzieren, hat es sich als sinnvoll erwiesen, wenn aus dem Innenvolumen austretende Lichtstrahlen durch eine Apertur einer Aperturblende treten, bevor sie optisch erfasst werden.

Zur automatischen Weiterverarbeitung lassen sich Aufnahmen des Dokuments oder des Dokumententeils erzeugen, wobei es sich als vorteilhaft erwiesen hat, wenn eine Bilderfassungseinrichtung vorhanden ist, die von dem Teil des Dokuments ausgehende Lichtstrahlen erfasst.

Weitere Vorteile, Merkmale und Einzelheiten ergeben sich aus den Ansprüchen, der nachfolgenden Beschreibung der bevorzugten Ausführungsformen sowie anhand der Zeichnung. Dabei zeigen:
- Fig. 1: eine erste Vorrichtung zur optischen Erfassung zumindest eines Teils eines Dokuments, insbesondere eines Ausweis-, Wert- oder Sicherheitsdokuments, in einem Längsschnitt,
- Fig. 2: die Vorrichtung zur optischen Erfassung aus Figur 1 in einer Unteransicht, wobei der Übersicht halber die Bilderfassungseinrichtung weggelassen wurde,
- Fig. 3: eine zweite Vorrichtung zur optischen Erfassung zumindest eines Teils eines Dokuments, insbesondere eines Ausweis-, Wert- oder Sicherheitsdokuments, in einem Längsschnitt,
- Fig. 4: die Vorrichtung zur optischen Erfassung aus Figur 3 in einer Unteransicht, wobei der Übersicht halber die Bilderfassungseinrichtung weggelassen wurde.

In den Figuren ist eine Vorrichtung 100 zur optischen Erfassung zumindest eines Teils eines Dokuments 102, insbesondere eines Ausweis-, Wert- oder Sicherheitsdokuments, gezeigt, welches eine zumindest teiltransparente Auflage 104 zum Auflegen des Dokuments 102 umfasst. Vorzugsweise ist die Auflage 104 aus durchsichtigem Glas gebildet, so dass sie nicht nur teiltransparent wirkt. Es ist außerdem eine Beleuchtungseinrichtung 106 vorhanden, die eine Mehrzahl von Leuchteinheiten 120 umfasst. Diese Beleuchtungseinrichtung 106, insbesondere die Leuchteinheiten 120, emittieren Licht einer vorgegebenen oder vorgebbaren Wellenlänge. Sie können auch Licht aus einem vorgegebenen oder vorgebbaren Wellenlängenbereich emittieren.

Die gezeigten Vorrichtungen 100 zur optischen Erfassung weisen eine Lichtleiteinrichtung 108 auf, die vorliegend an einer Gehäusewand 116 eines Gehäuses 114 angeordnet ist. Vorliegend ist zumindest derjenige Abschnitt des Gehäuses 114 und damit der Gehäusewand 116 hohlzylindrisch geformt, in welchem sich die Lichtleiteinrichtung 108 befindet. Die Lichtleiteinrichtung 108 umfasst einen oder mehrere Lichtleiter 110, wobei das von der Beleuchtungseinrichtung 106 emittierte Licht in den einen oder die mehreren Lichtleiter 110 einkoppelbar oder eingekoppelt ist.

Vorzugsweise umfasst der eine oder die mehreren Lichtleiter 110 der Lichtleiteinrichtung 108 Streuzentren für Licht bildende Störstellen. An diesen Störstellen wird das Licht gestreut, bis es über eine Auskoppeloberfläche 124 aus der Lichtleiteinrichtung 108 ausgekoppelt und dadurch in ein Innenvolumen 112 eingekoppelt wird. Das Licht wird so also diffus innerhalb der Vorrichtung 100, insbesondere innerhalb des Innenvolumens 112, verteilt. Um Passdokumente auslesen zu können, hat es sich als ausreichend erwiesen, wenn der eine oder die mehreren Lichtleiter 110 aus einem Material gebildet sind, welches opak ist für Licht mit einer Wellenlänge außerhalb eines Bereichs von 360 Nanometern bis 950 Nanometern.

Die Lichtleiteinrichtung 108 ist bei allen gezeigten Vorrichtungen 100 zur optischen Erfassung unmittelbar an der Gehäusewand 116 des Gehäuses 114 befestigt. Um Verlusten vorzubeugen, ist die Gehäusewand 116 als ein Reflektor 118 gebildet, so dass auf dem Reflektor 118 auftreffende Lichtstrahlen ins Innere der Vorrichtung 100, mithin in den einen oder die mehreren Lichtleiter 110 reflektiert werden.

Der eine oder die mehreren Lichtleiter 110 der Lichtleiteinrichtung 108 sind derart im Gehäuse 114 angeordnet, dass die Lichtleiteinrichtung 108 eine bezüglich einer Längsachse 134 radial angeordnete und über einen Umfang eines - zumindest gedachten - zylindrischen Innenvolumens 112 gleichmäßig verteilte Anordnung aufweist. Mit anderen Worten ist also die Lichtleiteinrichtung 108 auf dem Mantel eines Innenvolumenzylinders angeordnet und gleichmäßig verteilt, wodurch sich eine homogene Beleuchtung des Dokuments 102 auf der Auflage 104 erzielen lässt.

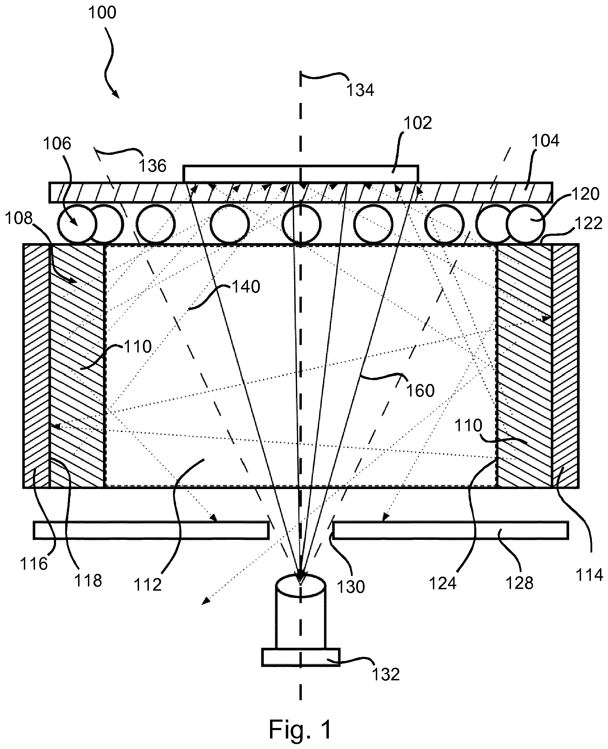

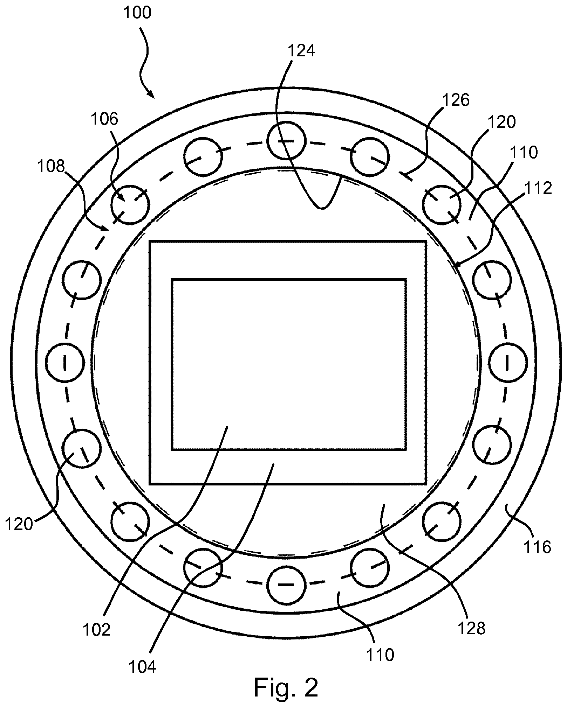

Bei der Vorrichtung 100 zur optischen Erfassung nach den Figuren 1 und 2 ist der Lichtleiter 110 der Lichtleiteinrichtung selbst hohlzylindrisch geformt, wobei er eine einteilige Auskoppeloberfläche 124 aufweist, die auf dem Mantel des zylindrischen Innenvolumens 112 angeordnet ist bzw. dieses Innenvolumen 112 begrenzt. Das Licht der Beleuchtungseinrichtung 106 wird axial, insbesondere koaxial zur Längsachse 134, über die stirnseitige Einkoppeloberfläche 122 des einteilig gebildeten Lichtleiters 110 eingekoppelt. Vorliegend ist die Beleuchtungseinrichtung in einer zwischen der Auflage 104 und der Lichtleiteinrichtung 108, insbesondere senkrecht bezüglich der Längsachse 134 ausgerichteten, Ebene angeordnet. Es besteht jedoch auch die Möglichkeit, die Beleuchtungseinrichtung 106 auf der von der Auflage 104 abgewandten Seite des Lichtleiters 110 anzuordnen.

Wie sich aus Figur 2 ergibt, sind die Leuchteinheiten 120 der Beleuchtungseinrichtung 106 auf einem - zumindest gedachten - Leuchtenkreis 126 angeordnet, der konzentrisch zur Längsachse 134 orientiert ist. Dabei sind die Leuchteinheiten 120, vorzugsweise äquidistant zueinander, angeordnet, mithin also gleichverteilt auf dem Leuchtenkreis 126 positioniert.

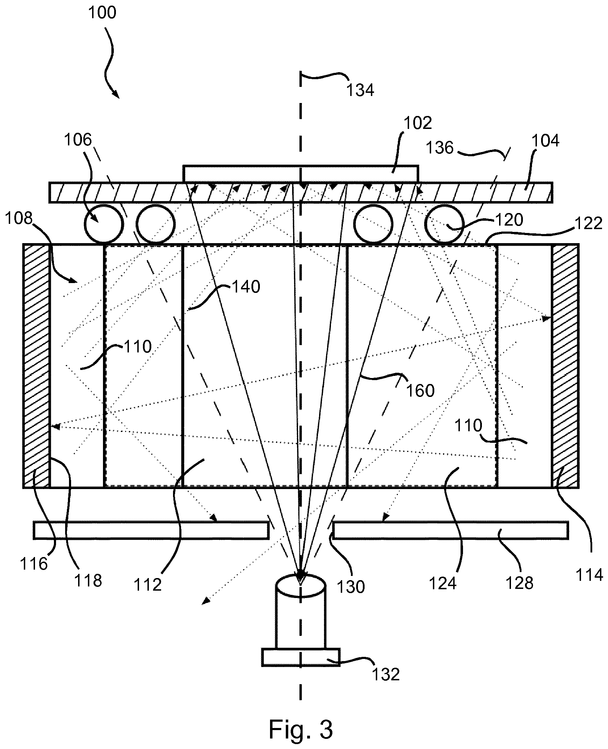

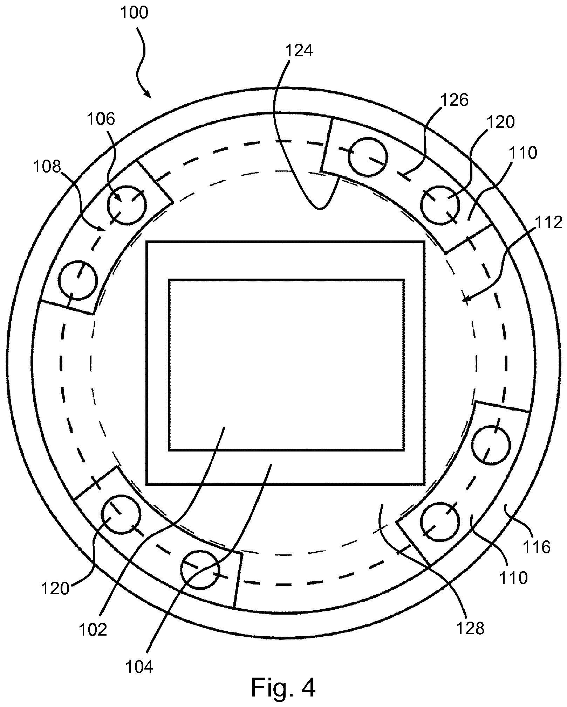

Die Vorrichtung 100 zur optischen Erfassung eines Dokuments 102 nach Figuren 3 und 4 unterscheidet sich von der Vorrichtung 100 nach Figuren 1 und 2 dadurch, dass die Lichtleiteinrichtung 108 mehrere Lichtleiter 110 umfasst. Vorliegend sind vier der Lichtleiter 110 vorhanden, die derart im Gehäuse 114 angeordnet sind, dass die Lichtleiteinrichtung 108 ebenfalls eine bezüglich der Längsachse 134 radial angeordnete und über den Umfang des zylindrischen Innenvolumens 112 gleichmäßig verteilte Anordnung aufweist. Mit anderen Worten sind die Lichtleiter 110 auf dem Mantel des Innenvolumens 112 positioniert und vorzugsweise gleichverteilt über den Umfang des Innenvolumens 112 angeordnet. Es sei angemerkt, dass eine andere Anzahl von Lichtleitern 110 möglich ist, so dass nicht zwangsläufig vier der Lichtleiter 110 vorhanden sein müssen. Auch hier ist die Beleuchtungseinrichtung 106 mit einer Mehrzahl von Leuchteinheiten 120 gebildet, die auf einem Leuchtenkreis 126 angeordnet sind. Vorzugsweise ist die Anzahl an Leuchteinheiten 120 ein ganzzahliges Vielfaches, vorliegend ein Zweifaches, der Anzahl an Lichtleitern 110. Vorzugsweise stimmt aber - um die Vorrichtung 100 kompakt zu gestalten - die Anzahl an Leuchteinheiten 120 mit der Anzahl an Lichtleitern 110 überein. Die Lichtleiteinrichtung 108 weist also aufgrund der mehreren Lichtleiter 110 eine mehrteilige Auskoppeloberfläche 124 auf, durch welche die aus den Lichtleitern 110 austretenden Lichtstrahlen 140 in das zylindrische Innenvolumen 112 eingekoppelt werden.

Bei den gezeigten Vorrichtungen 100 zur optischen Erfassung eines Dokuments 102 ist zusätzlich eine eine Apertur 130 aufweisende Aperturblende 128 vorhanden, die ausgestaltet ist, den Störlichtanteil zu reduzieren. Auf der der Auflage 104 abgewandten Seite der Aperturblende 128 ist eine Bilderfassungseinrichtung 132 angeordnet, die die von dem Dokument 102 ausgehenden Lichtstrahlen 160 erfasst. Die Apertur 130 ist vorliegend rechteckig, insbesondere nahezu quadratisch, gestaltet. Die Bilderfassungseinrichtung 132 ist ausgestaltet, alle aus Richtung eines Erfassungskegels 136 auf sie auftreffende Lichtstrahlen 140, 160 zu erfassen. Hierzu ist die Bilderfassungseinrichtung 132 ebenfalls auf der Längsachse 134 des Zylinders des Innenvolumens 112 angeordnet, wobei ihre Optik auf die Auflage 104 bzw. auf das Dokument 102 gerichtet ist.

Nachstehend wird die Funktionsweise der Vorrichtungen 100 zur optischen Erfassung zumindest eines Teils eines Dokuments 102 beschrieben.

Zunächst wird das Dokument 102 auf die aus einem Glas gebildete Auflage 104 aufgelegt. Zugleich oder nachfolgend wird Licht von den Leuchteinheiten 120 der Beleuchtungseinrichtung 106 emittiert und in die (in Figuren 1 und 2 einteilige und in Figuren 3 und 4 mehrteilige) Einkoppeloberfläche 122 der Lichtleiteinrichtung 108 eingekoppelt. Das eingekoppelte Licht wird an mindestens einer Störstelle der Lichtleiter 110 gestreut, bevor es die Lichtleiteinrichtung 108 über die auf dem Mantel des zylindrischen Innenvolumens 112 verteilte (in Figuren 1 und 2 einteilige und in Figuren 3 und 4 mehrteilige) Auskoppeloberfläche 124 ins Innenvolumen 112 verlässt.

Die über die Auskoppeloberfläche 124 ausgekoppelten Lichtstrahlen 140 treffen - diffus - auf die Auflage 104 und damit auf das Dokument 102. Die Lichtstrahlen 140, die nicht auf dem Dokument 102 auftreffen, werden von die Apertur 130 begrenzenden Wangen der Aperturblende 130 absorbiert. Die vom Dokument 102 ausgehende Lichtstrahlen 160 treten durch die Apertur 130 der Aperturblende 128, bevor sie optisch, vorliegend von einer Bilderfassungseinrichtung 132 in Form einer Kamera, erfasst werden.

Durch die vorstehenden Vorrichtungen 100 und das vorstehend beschriebene Verfahren bei der Verwendung derselben lässt sich die Bildqualität beim Auslesen von Ausweis-, Wert- oder Sicherheitsdokumenten, beispielsweise von Reisepässen, erheblich verbessern. Durch den Einsatz von in Großserie gefertigtem opaken Material für die Lichtleiteinrichtung 108 entsteht zudem ein Preisvorteil gegenüber eines kundenspezifisch gefertigten Lichtleiters, wobei sich zudem Bauraumvorteile ergeben und sich die Vorrichtung 100 sehr kompakt gestalten lässt.

### BEZUGSZEICHENLISTE

- 100: Vorrichtung zur optischen Erfassung
- 102: Dokument
- 104: Auflage
- 106: Beleuchtungseinrichtung
- 108: Lichtleiteinrichtung
- 110: Lichtleiter
- 112: Innenvolumen (strichliert dargestellt)
- 114: Gehäuse
- 116: Gehäusewand
- 118: Reflektor (Reflektoroberfläche)
- 120: Leuchteinheit
- 122: Einkoppeloberfläche
- 124: Auskoppeloberfläche
- 126: Leuchtenkreis (strichliert dargestellt)
- 128: Aperturblende
- 130: Apertur
- 132: Bilderfassungseinrichtung
- 134: Längsachse
- 136: Erfassungskegel (strichliert dargestellt)
- 140: Lichtstrahlen (punktiert dargestellt)
- 160: Lichtstrahlen (ausgehend vom Dokument / durchgezogen dargestellt)

## Patentansprüche

1. Vorrichtung (100) zur optischen Erfassung zumindest eines Teils eines Dokuments (102), mit einer zumindest teiltransparenten Auflage (104) zum Auflegen des Dokuments (102), mit einer Licht emittierenden Beleuchtungseinrichtung (106), und mit einer an einer Gehäusewand (116) eines Gehäuses (114) angeordneten Lichtleiteinrichtung (108), die einen oder mehrere Lichtleiter (110) umfasst, wobei das von der Beleuchtungseinrichtung (106) emittierte Licht in den einen oder die mehreren Lichtleiter (110) einkoppelbar oder eingekoppelt ist, wobei die Gehäusewand (116) hohlzylindrisch ist, wobei der eine oder die mehreren Lichtleiter (110) der Lichtleiteinrichtung (108) derart an der hohlzylindrischen Gehäusewand (116) im Gehäuse (114) angeordnet ist, dass die Lichtleiteinrichtung (108) eine bezüglich einer Längsachse (134) radial ausgerichtete und über einen Umfang eines zylindrischen Innenvolumens (112) gleichmäßig verteilte Anordnung aufweist, **dadurch gekennzeichnet, dass** der eine oder die mehreren Lichtleiter (110) eine radial bezüglich dem zylindrischen Innenvolumen (112) ausgerichtete Auskoppeloberfläche (124) zur radialen Auskoppelung des Lichts in das Innenvolumen (112) umfasst.

2. Vorrichtung (100) nach Anspruch 1, **dadurch gekennzeichnet, dass** der Lichtleiter (110) der Lichtleiteinrichtung (108) hohlzylindrisch geformt ist.

3. Vorrichtung (100) nach Anspruch 1 oder 2, **dadurch gekennzeichnet, dass** der eine oder die mehreren Lichtleiter (110) Störstellen umfassen, die Streuzentren für Licht bilden.

4. Vorrichtung (100) nach einem der Ansprüche 1 bis 3, **dadurch gekennzeichnet, dass** der eine oder die mehreren Lichtleiter (110) aus einem Material gebildet sind, welches opak ist für Licht mit einer Wellenlänge außerhalb eines Bereichs von 360 Nanometern bis 950 Nanometern.

5. Vorrichtung (100) nach einem der Ansprüche 1 bis 4, **dadurch gekennzeichnet, dass** die Gehäusewand (116) einen bezüglich der Längsachse (134) radial nach innen gerichteten Reflektor (118) bildet, der ausgestaltet ist, auf ihn auftreffendes Licht in den einen oder die mehreren Lichtleiter (110) zu reflektieren.

6. Vorrichtung (100) nach einem der Ansprüche 1 bis 5, **dadurch gekennzeichnet, dass** die Beleuchtungseinrichtung (106) eine Mehrzahl von Leuchteinheiten (120) umfasst, und dass die Leuchteinheiten (120) ausgestaltet sind, Licht in einer einen axialen Anteil aufweisenden Richtung, in den einen oder die mehreren Lichtleiter (110) einzukoppeln.

7. Vorrichtung (100) nach Anspruch 6, **dadurch gekennzeichnet, dass** die Leuchteinheiten (120) auf einem Leuchtenkreis (126) angeordnet sind, der konzentrisch zur Längsachse (134) angeordnet ist.

8. Vorrichtung (100) nach Anspruch 6 oder 7, **dadurch gekennzeichnet, dass** die Leuchteinheiten (120) äquidistant zueinander und/oder gleichverteilt auf dem Leuchtenkreis (126) angeordnet sind.

9. Vorrichtung (100) nach einem der Ansprüche 1 bis 8, **dadurch gekennzeichnet, dass** eine Aperturblende (128) vorhanden ist zur Reduktion eines Störlichtanteils.

10. Vorrichtung (100) nach einem der Ansprüche 1 bis 9, **dadurch gekennzeichnet, dass** eine Bilderfassungseinrichtung (132) vorhanden ist, die derart ausgelegt ist, um von dem Dokument (102) ausgehende Lichtstrahlen (160) zumindest mittelbar zu erfassen.

11. Verwendung einer Vorrichtung (100) nach einem der Ansprüche 1 bis 10 zur optischen Erfassung zumindest eines Teils eines Dokuments (102), insbesondere eines Ausweis-, Wert- oder Sicherheitsdokuments.

## Claims

1. A device (100) for optically detecting at least a part of a document (102), having an at least partially transparent support (104) for placing the document (102) on, having a light-emitting illumination device (106) and having a light guide device (108) which is arranged at least indirectly on a housing wall (116) of a housing (114) and comprises one or more light guides (110), it being possible for the light emitted by the illumination device (106) to be coupled into the one or more light guides (110), whereas the one or more light guides (110) use arranged at the hollow cylindrical formed housing wall (116) such that the light guide device (108) has an uniform arrangement radial in relation to a longitudinal axis, and in relation to a circumference of a cylindrical inner volume (112), **characterized in that** the one or more light guides (110) of the light guide device (108) have an outcoupling surface (124) for radially outcoupling of the light into the inner volume (112), which is arranged radially in relation to the inner volume (112).

2. The device (100) according to claim 1, **characterized in that** the light guide (110) of the light guide device (108) is hollow cylindrical in shape.

3. The device (100) of claim 1 or 2, **characterized in that** the one or more light guides (110) comprise interference sites that form scattering centres for light.

4. The device (100) of any one of claims 1 to 3, **characterized in that** the one or more light guides (110) are formed of a material that is opaque to light having a wavelength outside a range of 360 nanometres to 950 nanometres.

5. The device (100) of any one of claims 1 to 4, **characterized in that** the housing wall (116) forms a reflector (118) directed radially inward with respect to the longitudinal axis (134) and configured to reflect light incident thereon into the one or more light guides (110).

6. The device (100) of any of claims 1 to 5, **characterized in that** the illumination device (106) comprises a plurality of light units (120), and **in that** the light units (120) are configured to couple in light, in a direction having an axial component, into the one or more light guides (110).

7. The device (100) according to claim 6, **characterized in that** the light units (120) are arranged on a light circle (126) that is concentric to the longitudinal axis (134).

8. The device (100) according to claim 6 or 7, **characterized in that** the light units (120) are arranged equidistant to each other and/or are equally distributed on the light circle (126).

9. The device (100) according to any one of claims 1 to 8, **characterized in that** an aperture diaphragm (128) is provided for reducing an interference light component.

10. The device (100) according to any one of claims 1 to 9, **characterized in that** an image capture device (132) is provided which is adapted to at least indirectly capture light beams (160) emanating from the document (102).

11. Use of a device (100) according to any one of claims 1 to 10 for optically detecting at least a part of a document (102), in particular an identification, value or security document.

## Revendications

1. Dispositif (100) pour la détection optique d'au moins une partie d'un document (102), avec un support (104) au moins partiellement transparent pour poser le document (102), avec un dispositif d'éclairage (106) émettant de la lumière, et avec un dispositif de guidage de lumière (108) disposé sur une paroi de boîtier (116) d'un boîtier (114), qui comprend un ou plusieurs guides de lumière (110), dans lequel la lumière émise par le dispositif d'éclairage (106) peut être couplée ou est couplée dans l'un ou les plusieurs guides de lumière (110), dans lequel la paroi de boîtier (116) est de forme cylindrique creuse, dans lequel l'un ou les plusieurs guides de lumière (110) du dispositif de guidage de lumière (108) sont disposés sur la paroi de boîtier de forme cylindrique creuse (116) dans le boîtier (114) de sorte que le dispositif de guidage de lumière (108) présente une disposition orientée radialement par rapport à un axe longitudinal (134) et répartie uniformément sur une périphérie d'un volume intérieur cylindrique (112), **caractérisé en ce que** l'un ou les plusieurs guides de lumière (110) comprennent une surface de découplage (124) orientée radialement par rapport au volume intérieur cylindrique (112) pour le découplage radial de la lumière dans le volume intérieur (112).

2. Dispositif (100) selon la revendication 1, **caractérisé en ce que** le guide de lumière (110) du dispositif de guidage de lumière (108) est de forme cylindrique creuse.

3. Dispositif (100) selon la revendication 1 ou 2, **caractérisé en ce que** l'un ou les plusieurs guides de lumière (110) comprennent des imperfections formant des centres de diffusion de la lumière.

4. Dispositif (100) selon l'une quelconque des revendications 1 à 3, **caractérisé en ce que** l'un ou les plusieurs guides de lumière (110) sont formés d'un matériau qui est opaque à la lumière avec une longueur d'onde en dehors d'une plage de 360 nanomètres à 950 nanomètres.

5. Dispositif (100) selon l'une quelconque des revendications 1 à 4, **caractérisé en ce que** la paroi de boîtier (116) forme un réflecteur (118) orienté radialement vers l'intérieur par rapport à l'axe longitudinal (134), qui est conçu pour réfléchir la lumière qui le frappe dans l'un ou les plusieurs guides de lumière (110).

6. Dispositif (100) selon l'une quelconque des revendications 1 à 5, **caractérisé en ce que** le dispositif d'éclairage (106) comprend une pluralité d'unités d'éclairage (120), et **en ce que** les unités d'éclairage (120) sont conçues pour coupler de la lumière dans une direction présentant une part axiale dans l'un ou les plusieurs guides de lumière (110).

7. Dispositif (100) selon la revendication 6, **caractérisé en ce que** les unités d'éclairage (120) sont disposées sur un circuit d'éclairage (126) qui est disposé concentriquement par rapport à l'axe longitudinal (134).

8. Dispositif (100) selon la revendication 6 ou 7, **caractérisé en ce que** les unités d'éclairage (120) sont disposées à équidistance les unes des autres et/ou réparties de manière égale sur le circuit d'éclairage (126).

9. Dispositif (100) selon l'une quelconque des revendications 1 à 8, **caractérisé en ce qu'**un diaphragme d'ouverture (128) est présent pour réduire une part de lumière parasite.

10. Dispositif (100) selon l'une quelconque des revendications 1 à 9, **caractérisé en ce qu'**un dispositif d'acquisition d'images (132) est présent, qui est conçu de manière à détecter au moins indirectement des faisceaux lumineux (160) provenant du document (102).

11. Utilisation d'un dispositif (100) selon l'une quelconque des revendications 1 à 10 pour la détection optique d'au moins une partie d'un document (102), en particulier d'un document d'identité, de valeur ou de sécurité.
